# EUROPEAN PATENT APPLICATION

(11) **EP 2 045 118 A2**
(43) Date of publication of application: **08.04.2009**
(21) Application number: 08165782.7
(22) Date of filing: 02.10.2008
(51) Int. Cl.: B60N 2/015

(54) **Seat Movement Device & Methods of Removing and Installing Seats in Vehicles**

(30) Priority: 05.10.2007 GB 0719552
(71) Applicant: Rescroft Limited, East Moons Moat Redditch, Worcestershire B98 0RE (GB)
(72) Inventor: Kimberley, Jason, Worcestershire B98 ORE (GB)
(74) Representative: Wardley, Diana Mary

(57) **Abstract**

A seat movement device includes means (30) for releasably securing it to a removable vehicle seat (10) and a wheel (36) which, when the device is secured to a seat and the seat is released from an anchorage system in the vehicle, can be ground engaging as desired such that the seat can be wheeled around as desired.

A method of removing a vehicle seat from a vehicle comprises the steps of releasably securing a seat movement device including a wheel to the seat, releasing the seat from an anchorage system in the vehicle, tipping the seat such that it is lifted off the ground and supported on the wheel, wheeling the seat from the vehicle, removing the seat movement device from the seat.

A method of installing a vehicle seat in a vehicle comprises the steps of releasably securing a seat movement device including a wheel to the seat, tipping the seat such that it is lifted off the ground and supported on the wheel, wheeling the seat into a desired location in the vehicle, removing the seat movement device from the seat, and securing the seat to an anchorage system in the vehicle.

## Description

### Description of Invention

The invention relates to a seat movement device to assist in the removal or installation of seats from or into vehicles, such as minibuses, when the seating layout needs changing temporarily, and methods of removing or installing seats.

Minibuses and the like are often used to transport disabled people in wheelchairs, and thus they often need flexible seating arrangements whereby seats can be fitted for use by more able bodied passengers, or removed when the spaces are to be used by wheelchair occupants. The seats fitted in such vehicles are quite heavy as they need to be strong in order to meet safety standards, for which they undergo rigorous testing. As a result there are issues relating to health and safety for the people who remove and replace the seats, because often they have to pick the seats up and carry them to or from their temporary storage locations.

Clearly it would be preferable to provide wheels on the seats or seat fixtures such that they do not need to be carried. Indeed it is known to provide wheels as part of each removable seat or seat fixture in such vehicles, and two examples of systems that provide this are sold by NMI Safety Systems as Millennium Wheel Fittings and C.N. Unwin Limited as Xtract. These wheel systems are permanently fitted to the seat fixtures, i.e. to the pedestals which support the seats, but only come into use when a seat is released from an anchorage point on the floor of the vehicle from which it is to be removed.

As each such wheel fitting has a significant cost this significantly increases the cost of the seating installation in a vehicle, which is clearly undesirable, and for some charities (who are often the owners of such vehicles) not viable. Also, some of these systems provide significant disadvantages when the seats are in use in the vehicle. Some of the wheel fittings are quite bulky, with parts protruding rearwardly of the seat pedestal, and thus can make it harder for the passengers using the seats to move around the vehicle as they provide trip hazards. The wheel fittings can also restrict where passengers can place their feet and legs during journeys, which can make the journeys less comfortable.

It is an object of the present invention to provide an alternative method of providing wheels for use in removing and replacing seats from and into vehicles that addresses these problems, and further objects to provide new methods of removing seats from and installing seats in vehicles.

According to a first aspect of the present invention there is provided a seat movement device which includes means for releasably securing it to a removable vehicle seat and a wheel which, when the device is secured to a seat and the seat is released from an anchorage system in the vehicle, can be ground engaging as desired such that the seat can be wheeled around as desired.

Preferably in order to releasably secure the seat movement device to the seat the seat is released from the anchorage system in the vehicle and the seat is tipped forwards.

Conveniently when the device is releasably secured to a seat, in order to bring the wheel into ground engagement and remove all parts of the seat from the ground the seat is tipped backwards.

Preferably the means for releasably securing it to a removable vehicle seat is operable to secure the device to a seat and remove the device from a seat without the need for tools.

The seat movement device may include a portion for receipt in a socket on the seat, and a latch mechanism to retain it therein.

Preferably the latch mechanism operates automatically to retain the portion of the seat movement device in the socket and is releasable when it is desired to remove the seat movement device from the seat.

The seat movement device may include an elongate member one end of which is in use secured to the vehicle seat and the other end of which supports an axle on which the wheel is rotatable.

The seat movement device may include means to adjust the length of the elongate member.

The elongate member may comprise first and second parts which are telescopic and means may be provided to secure the first and second parts in position relative to each other to provide the desired length of the elongate member.

According to a second aspect of the present invention there is provided a method of removing a vehicle seat from a vehicle comprising the steps of releasably securing a seat movement device including a wheel to the seat, releasing the seat from an anchorage system in the vehicle, tipping the seat such that it is lifted off the ground and supported on the wheel, wheeling the seat from the vehicle, removing the seat movement device from the seat.

Preferably the seat is released from the anchorage mechanism prior to having the seat movement device releasably secured to it.

Conveniently the seat is tipped forwards in order to releasably secure the seat movement device to it or remove the seat movement device from it.

According to a third aspect of the present invention there is provided a method of installing a vehicle seat in a vehicle comprising the steps of releasably securing a seat movement device including a wheel to the seat, tipping the seat such that it is lifted off the ground and supported on the wheel, wheeling the seat into a desired location in the vehicle, removing the seat movement device from the seat, and securing the seat to an anchorage system in the vehicle.

Preferably the seat movement device is removed from the seat before the seat is secured to the anchorage system in the vehicle.

Conveniently the seat is tipped forwards in order to releasably secure the seat movement device to it or remove the seat movement device from it.

According to a fourth aspect of the present invention there is provided a kit of parts comprising a seat movement device according to the first aspect of the invention and a part for retro-fitting to a removable vehicle seat by means of which the seat movement device may be releasably secured to the vehicle seat.

The part for retro-fitting to a removable vehicle seat may be a socket for receipt of a portion of the seat movement device.

According to a fifth aspect of the invention there is provided a removable vehicle seat having secured to it a means by which a seat movement device according to the first aspect of the invention may be releasably secured to the vehicle seat.

The removable vehicle seat wherein the means for releasably securing a seat movement device to it is a socket for receipt of a portion of the seat movement device.

An embodiment of a seat movement device according to the present invention will now be described, by way of example only, with reference to the accompanying drawings in which:
Figure 1 is a schematic rear view of a vehicle seat of the kind with which the invention is designed to be used, with a device according to the invention fitted to it;
Figure 2 is a schematic side view of the vehicle seat and device combination of Figure 1 with the nearside legs omitted for clarity;
Figure 3 shows, in schematic views a), b) and c), the process of fitting the device according to the invention to a vehicle seat and it's use;
Figure 4 shows a perspective view of a seat movement device according to the invention with a socket for retrofitting to a vehicle seat, and
Figure 5 shows (a) a rear view of the device of Figure 4 and (b) a cross section through the device of Figure 4 along the line A-A shown in (a).

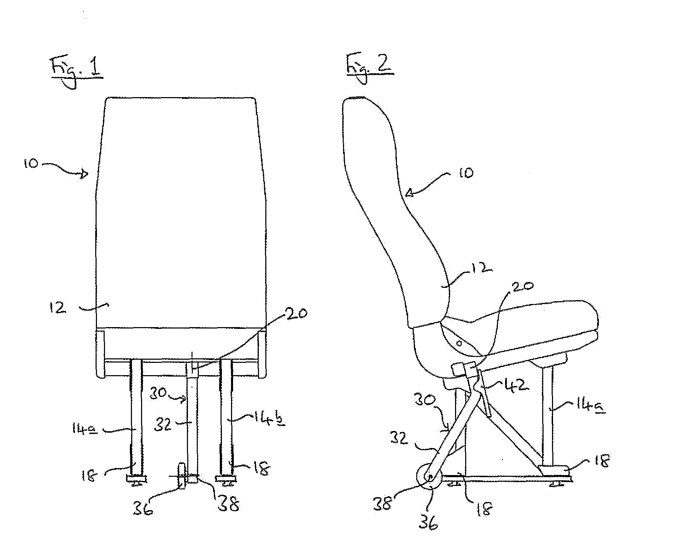

Referring to figures 1 to 3, a vehicle seat 10 is of the kind that in use is secured to the floor of a vehicle such as a minibus (not shown) but which can readily be released from an anchorage (not shown) on the floor F of the vehicle, if it is desired to remove it in order to alter the seating configuration for any reason. Anchorage systems which permit such rapid installation and removal of seats without the use of tools are well known and as the manner in which the seat 10 is secured in use is not of relevance to the present invention will not be described here.

The vehicle seat 10 comprises a seat part 12 and a pedestal 14, the pedestal in this case comprising a left support leg 14a and a right support leg 14b. The seat part 12 includes a cross member 16 which extends across the width of the seat part 12 towards the bottom and rear thereof. The left and right support legs 14a and 14b have feet 18 by which they are mounted on releasable seat fixtures 19 which are compatible with the anchorage system in the vehicle and by means of which the seat may be removably secured to the anchorage system in the vehicle when in use. When in storage the seat 10 is placed on the releasable seat fixtures on any solid surface.

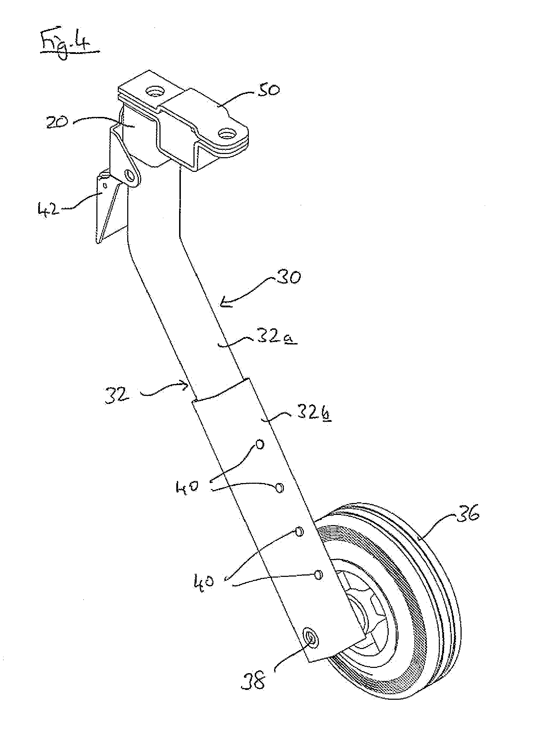

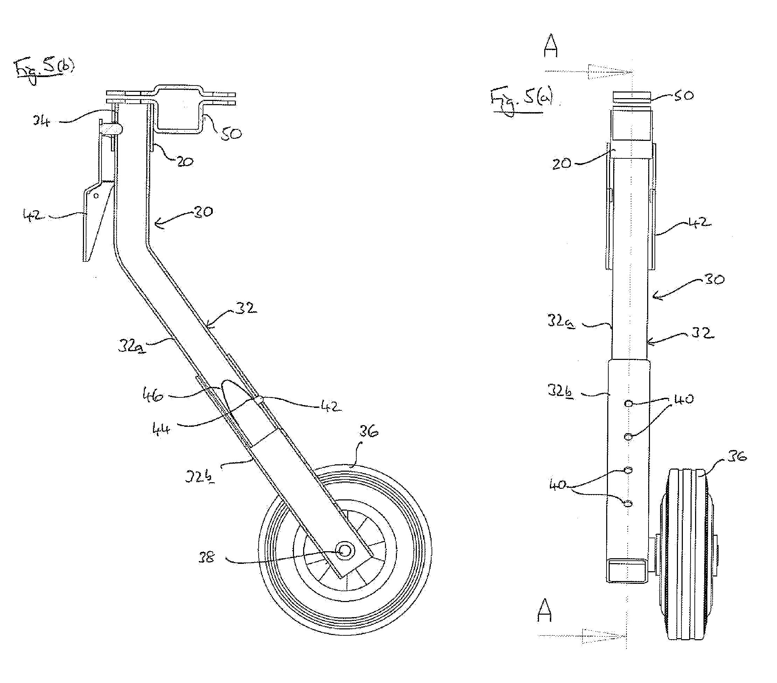

The seat 10 further includes a socket 20 secured to the cross member 16, the socket 20 having an opening which faces in a generally downward direction. The socket 20 may have been included in the seat 10 when it was manufactured or may have been fitted at a later time. In the latter case it may be fitted by permanent means such as welding, or it may be semi-permanently fitted by means such as threaded fasteners (an example of such a fixing method is discussed below with reference to Figures 4 and 5), or it may be clipped on in some more readily removable manner. It will be appreciated that a suitable approach may be chosen for each particular situation.

A seat movement device 30 comprises an elongate member 32 with, at a first end thereof, a portion 34 for receipt in the socket 20 on the seat 10 and, at a second end thereof, a wheel 36 mounted for rotation about an axle 38. The device 30 further includes a latch mechanism including a lever 42 which is operable to release the device 30 from the socket 20. Preferably the latch mechanism is of a kind that automatically latches when the portion 34 is inserted into the socket 20 in order to retain the device 30 in place until its removal is desired, at which time the lever 42 is operated to release it.

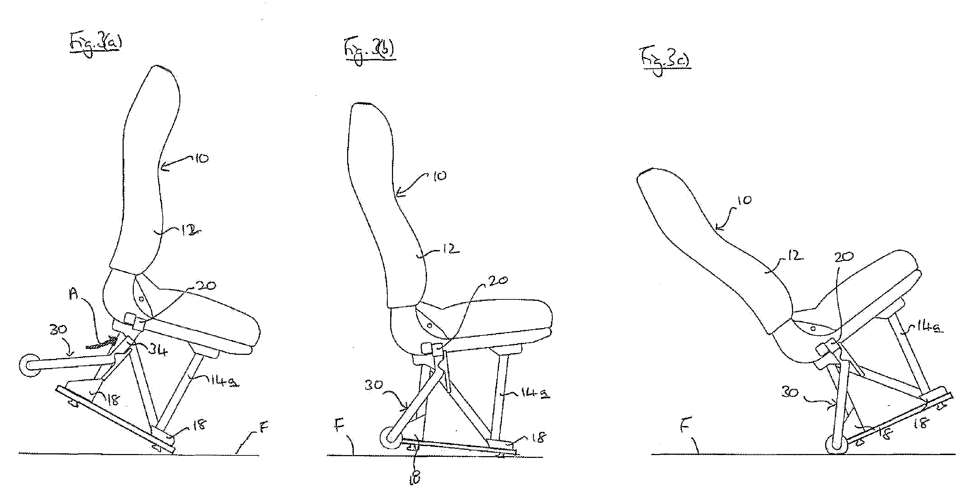

Use of the device 30 is best described with reference to Figure 3. First the seat 10 is released from the anchorage system (not shown) on the floor F of the vehicle (not shown). Then the seat 10 is tipped forwards, lifting the rear parts of the support legs 14 off the floor, as shown in Figure 3(a). The portion 34 of the elongate member 32 of the device 30 is then inserted upwardly into the socket 20 on the seat, also as shown in Figure 3(a) by arrow A, and the latch mechanism operates to retain it in place. The seat 10 can then be rested back on the floor F, but now the rear of the seat 10 is supported on the wheel 36 rather then the rear part of the releasable seat fixture 19, as shown in Figure 3(b).

When it is desired to move the seat 10 it is tipped backwards, as show in Figure 3(c), such that it is supported only on the wheel 36 and can be wheeled on the vehicle floor and along the ground, in manner similar to a wheelbarrow, to the new location where it is to be stored. Once in that location in which it is to be stored the seat 10 is then tipped forwards again, as shown in Figure 3(a), in order that the device 30 can be removed from the socket 20. The lever 42 is operated to release the latch mechanism in order to permit this. The seat 10 is then placed on the ground on the releasable seat fixture 19 for storage. The device 30 is free for use to move another seat 10 from a vehicle to a storage location or vice versa, in which case the process is simply reversed.

With reference now to Figures 4 and 5, as the device 30 is for use with a range of removable vehicle seats, which may have different heights of pedestal, and which may have the socket 20 fitted to them at different positions and thus different heights off the floor, it is preferable if it is provided with a mechanism that permits the length of the elongate member 32 to be adjusted to suit the particular situation. This is most conveniently achieved by making the elongate member 32 telescopic, with a first part 32a that slides inside a second part 32b, and with means provided to secure the first 32a and second 32b parts at particular relative positions to provide the required length. The means to secure the first 32a and second 32b parts at particular relative positions can take many forms. One example is shown in Figures 4 and 5, where the second part 32b of the elongate member 32 includes a number of spaced apart holes 40 along it's length. The first part 32a of the elongate member 32 has a pin 42 (with a rounded end in known fashion) within it which is biased out through a hole 44 in the first part 32a by leaf spring 46. The pin 42 can be arranged to protrude outwardly through any one the holes 40, in known fashion, to secure the first 32a and second 32b parts at particular relative positions to provide the required length.

Still with reference to Figures 4 and 5, an example of a socket 20 which can be retrofitted to a removable vehicle seat is illustrated. The socket 20 is secured (by any suitable means such as welding) to a clamp mechanism 50 which can be secured to a member of a seat using nuts and bolts or other suitable fixings (not shown).

The device 30 according to the invention provides several advantages over the systems of the prior art. First, embodiments may readily be designed that can be used with a range of vehicle seats whereas in the prior art they are suitable only for use with the seats produced by a particular manufacturer. Second, a single such device can be used to move a whole minibus full of seats, and is thus much more cost effective than the prior art systems provided. Third, the device can, in combination with a suitable socket or other means by which the device is secured to a vehicle seat, be used as a retro-fit option. Fourth, as the device is not installed on the seats when they are in the vehicle it does not affect the users of the vehicle seats in any way. Fifth, the device is reasonably compact and can readily be stored in the vehicle, if required, ready for use. Finally, the device is fitted to and removed from each seat without the use of any tools, which ensures that this can be achieved quickly and simply.

If the seat to be moved is a double seat then it is likely that two devices 30 would be secured to it in order to assist in moving the seat by providing improved lateral stability.

The device 30 has been described above as having a particular structure but, as will readily be appreciated by an engineer working in this area, there are many other ways in which a device according to the invention could be constructed, fitted to and removed from seats and so on, whilst still falling within the concept of the present invention. For example the device could include, in place of the single wheel rotatable on a short axle, a pair of wheels rotatable on a longer axle provided at the second end of an elongate member, in order to provide a degree of lateral stability when wheeling the seat 10 around. As another example, the manner in which the device 30 is removably secured to the seat 10 may be very different, one possibility being that a protrusion is provided on the seat and an opening for receipt of that protrusion on the device, and another possibility being that the device includes a part which clips around a component of the seat.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A seat movement device includes means for releasably securing it to a removable vehicle seat and a wheel which, when the device is secured to a seat and the seat is released from an anchorage system in the vehicle, can be ground engaging as desired such that the seat can be wheeled around as desired.

2. A seat movement device according to claim 1 wherein in order to releasably secure the seat movement device to the seat the seat is released from the anchorage system in the vehicle and the seat is tipped forwards.

3. A seat movement device according to claim 1 or 2 wherein, when it is releasably secured to a seat, in order to bring the wheel into ground engagement and remove all parts of the seat from the ground the seat is tipped backwards.

4. A seat movement device according to any one of claims 1, 2 or 3 wherein the means for releasably securing it to a removable vehicle seat is operable to secure the device to a seat and remove the device from a seat without the need for tools.

5. A seat movement device according to any one of claims 1 to 4 wherein the seat movement device includes a portion for receipt in a socket on the seat, and a latch mechanism to retain it therein.

6. A seat movement device according to claim 5 wherein the latch mechanism operates automatically to retain the portion of the seat movement device in the socket and is releasable when it is desired to remove the seat movement device from the seat.

7. A seat movement device according to any one of the preceding claims wherein it includes an elongate member one end of which is in use secured to the vehicle seat and the other end of which supports an axle on which the wheel is rotatable.

8. A seat movement device according to claim 7 wherein means are provided to adjust the length of the elongate member.

9. A seat movement device according to claim 8 wherein the elongate member comprises first and second parts which are telescopic and means are provided to secure the first and second parts in position relative to each other to provide the desired length of the elongate member.

10. A method of removing a vehicle seat from a vehicle comprising the steps of releasably securing a seat movement device including a wheel to the seat, releasing the seat from an anchorage system in the vehicle, tipping the seat such that it is lifted off the ground and supported on the wheel, wheeling the seat from the vehicle, removing the seat movement device from the seat.

11. A method of removing a vehicle seat from a vehicle according to claim 10 wherein the seat is released from the anchorage mechanism prior to having the seat movement device releasably secured to it.

12. A method of removing a vehicle seat from a vehicle according to claim 11 wherein the seat is tipped forwards in order to releasably secure the seat movement device to it or remove the seat movement device from it.

13. A method of installing a vehicle seat in a vehicle comprising the steps of releasably securing a seat movement device including a wheel to the seat, tipping the seat such that it is lifted off the ground and supported on the wheel, wheeling the seat into a desired location in the vehicle, removing the seat movement device from the seat, and securing the seat to an anchorage system in the vehicle.

14. A method of installing a vehicle seat in a vehicle according to claim 13 wherein the seat movement device is removed from the seat before the seat is secured to the anchorage system in the vehicle.

15. A method of installing a vehicle seat in a vehicle according to claim 14 wherein the seat is tipped forwards in order to releasably secure the seat movement device to it or remove the seat movement device from it.
